# EUROPÄISCHE PATENTSCHRIFT

(11) **EP 2 308 638 B1**
(45) Veröffentlichungstag und Bekanntmachung des Hinweises auf die Patenterteilung: **22.08.2012**
(21) Anmeldenummer: 10009901.9
(22) Anmeldetag: 20.09.2010
(51) Int. Cl.: B23Q 11/10, B24B 55/02, B23F 17/00, B23F 5/04

(54) **Hartfeinbearbeitungsmaschine zum Hartfeinbearbeiten eines Werkstücks**
Precision grinding machine for precision grinding of a workpiece
Machine de traitement dur et fin pour le traitement dur et fin d'une pièce usinée

(30) Priorität: 01.10.2009 DE 102009043677
(43) Veröffentlichungstag der Anmeldung: 13.04.2011
(73) Patentinhaber: Kapp GmbH, 96450 Coburg (DE); NILES Werkzeugmaschinen GmbH, 12681 Berlin (DE)
(72) Erfinder: Dremel, Ralf, 96215 Lichtenfels (DE); Müller, Frank, 96484 Wiesenfeld (DE); Schenk, Thomas, 96450 Coburg (DE)
(74) Vertreter: Gosdin, Michael

(56) Entgegenhaltungen:
- WO-A1-2004/091861
- DE-A1-102006 009 547
- DE-U1- 29 900 753
- US-A- 4 961 289
- US-B1- 6 305 183

## Beschreibung

Die Erfindung betrifft eine Hartfeinbearbeitungsmaschine zum Hartfeinbearbeiten eines Werkstücks, die mindestens zwei unterschiedliche Hartfeinbearbeitungswerkzeuge umfasst, die auf einer Werkzeugspindel angeordnet sind, wobei die Werkzeugspindel in Richtung ihrer Achse verschieblich auf einem Werkzeugträger angeordnet ist, der relativ zu einem Maschinenbett translatorisch verschieblich ist, und wobei die Hartfeinbearbeitungsmaschine weiterhin Kühlschmierstoffzufühnnittel für die Zuleitung von Kühlschmierstoff zur Bearbeitungsstelle zwischen Werkstück und Hartfeinbearbeitungswerkzeug aufweist.

Eine solche Maschine ist beispielsweise in der DE 299 00 753 U1 offenbart. Derartige Hartfeinbearbeitungsmaschinen werden beispielsweise bei der Zahnradherstellung als Verzahnungsschleifmaschinen eingesetzt. Dabei ist häufig eine Aufteilung des abzuschleifenden Aufmaßes vorgesehen, so dass das Zahnrad zunächst geschruppt und anschließend geschlichtet wird. Für das Schruppen kann eine Schleifschnecke eingesetzt werden, wobei dann das kontinuierliche Wälzschleifen zum Einsatz kommt; das Schlichten kann mit einer Profilschleifscheibe im Profilschleifverfahren erfolgen.

Damit der Schleifprozess einwandfrei durchgeführt werden kann und insbesondere eine thermische Überlastung der Zahnflanke vermieden wird, ist eine zuverlässige Versorgung der Kontaktstelle zwischen Schleifwerkzeug und Werkstück sicherzustellen, was durch die Anordnung von Kühlschmierstoffzuführmittel erfolgt.

Die US 6 305 183 B1 offenbart eine Sprühdüsenanordnung zur Kühlung eines Werkstücks während der spanenden Bearbeitung. Andere Lösungen sind aus der DE 10 2006 009 547 A1, aus der US 4 961 289 und aus der WO 2004/091861 A1 bekannt.

Für die beiden oben genannten Verfahren bestehen hinsichtlich einer sicheren Vermeidung thermischer Werkstückschädigungen deutlich unterschiedliche Anforderungen an die Kühlmittelzufuhr:

Beim kontinuierlichen Wälzschleifen wird aufgrund des Zusammenhangs zwischen Schnittgeschwindigkeit und Bearbeitungszeit üblicherweise mit Schnittgeschwindigkeiten, d. h. Umfangsgeschwindigkeiten der Schleifschnecke, von ca. 60 m/s oder mehr gearbeitet. Zur sicheren Vermeidung thermischer Schädigungen der Werkstückrandzone ist eine möglichst geringe Differenz zwischen Umfangsgeschwindigkeit der Schleifschnecke und der Austrittsgeschwindigkeit des Kühlmittelstrahles anzustreben, d. h. eine relativ hohe Austrittsgeschwindigkeit des Kühlschmierstoffs aus der Kühlschmierstoffdüse ist erforderlich. Diese hohe Geschwindigkeit wird durch einen kleinen Düsenaustrittsquerschnitt und einen hohen Versorgungsdruck erzeugt. Unter diesen Bedingungen stellt sich ein relativ geringer Volumenstrom ein, der sich jedoch nicht negativ auf den Schleifprozess oder die erzeugte Werkstückqualität auswirkt.

Beim Profilschleifen wird dagegen üblicherweise mit niedrigeren Schnittgeschwindigkeiten zwischen 25 und 35 m/s gearbeitet. Dieses Verfahren erfordert eine sichere Abdeckung des gesamten Schleifscheibenprofils durch den Kühlmittelstrahl. In Abhängigkeit von der jeweiligen Profilbreite und -höhe ergibt sich daraus die Forderung nach einem relativ großen Düsenaustrittsquerschnitt, wobei sich ein Kühlmittelstrahl mit geringer Austrittsgeschwindigkeit und niedrigem Druck, aber relativ hohem Volumenstrom einstellt.

Neben dem genannten speziellen Anwendungsfall der Hartfeinbearbeitung von Verzahnungen sind weitere allgemeine Fälle denkbar, in denen mehrere Werkzeuge mit deutlich unterschiedlichen Anforderungen an die Kühlmittelzufuhr nacheinander zum Einsatz kommen.

Nach einer üblichen Fertigungsmethode sind im Falle mehrerer Werkzeuge diese in Achsrichtung fluchtend auf einem Werkzeugdorn angeordnet, der zwischen einem Spindelmotor und einem Gegenlager eingespannt ist. Die gesamte Einheit bestehend aus Spindelmotor, Gegenlager, Werkzeugdorn und Werkzeugen ist auf einem in Achsrichtung der Werkzeuge beweglichen Schlitten (Werkzeugträger) angeordnet (zumeist als Y-Achse bezeichnet), mit dem die Werkzeuge in die für die Bearbeitung notwendige axiale Position relativ zum Werkstück gebracht werden.

Die zum Wälzschleifen eingesetzten schneckenförmigen Werkzeuge sind üblicherweise deutlich breiter als die reine Eingriffsbreite, die sich durch den Eingriff von Werkzeug und Werkstück ergibt. Dies hat den Zweck, diverse Shiftmethoden anwenden zu können, um die Zahnräder in spezieller Weise zu schleifen: Eingesetzt wird zunächst das diskontinuierliche Shiften in Werkzeugachsrichtung (Y-Achse) zwischen Schruppen und Schlichten bzw. zwischen der- Bearbeitung einzelner Werkstücke, um neue, unverbrauchte Schneckenbereiche in Eingriff zu bringen. Beim kontinuierlichen Shiften in Werkzeugachsrichtung (Y-Achse) während der Schleifbearbeitung eines Werkstücks (auch als Diagonalschleifen bezeichnet) kann eine gezielte Beeinflussung der Zahnflankentopologie und/oder -oberflächenstruktur erfolgen.

Die hier verwendeten Kühlmitteldüsen können starr ausgeführt sein, d. h. für einen bestimmten, nicht veränderlichen Werkstückdurchmesser optimiert sein, was sich insbesondere für nicht abrichtbare CBN-Schleifwerkzeuge empfiehlt, deren Durchmesser sich nicht ändert. Im Falle von Werkzeugen mit veränderlichem Durchmesser, d. h. namentlich für abrichtbare Schleifwerkzeuge, können die Kühlmitteldüsen so installiert sein, dass diese in einer Ebene, die senkrecht auf der Achse der Werkzeugspindel steht, beweglich angeordnet sind, so dass die Kühlmitteldüse mit abnehmendem Werkzeugdurchmesser entsprechend nachgeführt werden kann. Die Anpassung der Düsenposition an den aktuellen Werkzeugdurchmesser kann durch eine rotatorische oder durch eine translatorische Bewegung erfolgen.

In den vorbekannten Bearbeitungsfällen wird das Werkstück entweder nur mit einem einzigen Werkzeug bearbeitet (z. B. mit einer abrichtbaren Schleifschnecke; das Schruppen und das Schlichten erfolgt mit unterschiedlichen Breitenbereichen des gleichen Werkzeugs) oder es kommen zwei Werkzeuge des gleichen Typs und der gleichen Größe zum Einsatz (z. B. abrichtfreies Profilschleifen mit CBN-Schrupp- und -Schlichtscheibe). In diesen Fällen ist die Verwendung einer einzigen Düse - mit für das jeweils angewendete Werkzeug bzw. Bearbeitungsverfahren optimierten Eigenschaften - problemlos möglich.

Eine Kombination mehrerer Werkzeuge bzw. Bearbeitungsverfahren unterschiedlicher Art kommt üblicherweise zum Einsatz bei der Bearbeitung mehrerer Verzahnungen des gleichen Werkstücks in einer Aufspannung (z. B. Getriebewellen) oder bei der Bearbeitung einer Verzahnung mit unterschiedlichen Verfahren für das Schruppen und das Schlichten (z. B. Schruppen mit abrichtbarem Wälzschleifen, Schlichten mit abrichtfreiem Profilschleifen - wie eingangs erläutert).

In diesen Fällen sind folgende Varianten der Kühlmittelzufuhr bekannt:

Bekannt ist die Verwendung der gleichen Düse (mit oder ohne der oben genannten Durchmessemachführung) für die unterschiedlichen Werkzeuge. Dies hat den Nachteil, dass die Bedingungen der Kühlmittelzufuhr nicht für jedes verwendete Werkzeug optimiert sein können. Deswegen ist die Bearbeitung für mindestens eines der verwendeten Werkzeuge nur mit reduzierter Vorschubgeschwindigkeit möglich, woraus eine längere Bearbeitungszeit und damit ein Wirtschaftlichkeitsverlust resultieren.

Bekannt ist ferner, dass mehrere Düsen auf dem Schlitten der Y-Achse angeordnet sind, die mit dem Schlitten mitfahren, wobei die Düsen ihre Position relativ zum jeweiligen Werkzeug nicht verändern. Als nachteilig ergibt sich in diesem Falle folgendes: Damit im Falle des Wälzschleifens mit einem schneckenförmigen Werkzeug die oben genannten Shiftverfahren angewendet werden können, muss eine auf dem Schlitten der Y-Achse mitfahrende Düse so breit sein wie das gesamte Werkzeug, d. h. deutlich breiter also, als es aufgrund der effektiven Eingriffsbreite zwischen Werkzeug und Werkstück erforderlich wäre. Bei konstanter Austrittshöhe der Düsenöffnung vergrößert sich durch die Verbreiterung der Düse aber auch der Düsenquerschnitt, was im Widerspruch zu den für das Wälzschleifen als optimal geltenden Bedingungen steht. Auch in diesem Fall kann die Bearbeitung aufgrund der nicht optimalen Bedingungen der Kühlmittelzufuhr nur mit reduzierter. Vorschubgeschwindigkeit und damit mit längeren Bearbeitungszeiten und daher mit reduzierter Wirtschaftlichkeit durchgeführt werden.

Der Erfindung liegt daher die **Aufgabe** zugrunde, eine Hartfeinbearbeitungsmaschine der eingangs genannten Art so hinsichtlich der Kühlschmierstoffzuführmittel auszubilden, dass die oben genannten Nachteile vermieden werden und dass die Anwendung aller denkbaren Werkzeug- und Verfahrenskombinationen unter optimalen Kühlschmierstoff-Versorgungsbedingungen stattfinden können. Für jeden Werkzeugtyp und für jedes Bearbeitungsverfahren sollen jeweils die als optimal geltenden Bedingungen der Kühlmittelzufuhr eingestellt werden können. Weiterhin soll eine automatische Anpassung der Bedingungen der Kühlmittelzufuhr an das jeweils eingesetzte Werkzeug bzw. Bearbeitungsverfahren innerhalb eines Bearbeitungszyklus ohne Bedienereingriff möglich sein, d. h. ausgelöst durch die Maschinensteuerung.

Die **Lösung** dieser Aufgabe durch die Erfindung ist dadurch gekennzeichnet, dass die Kühlschmierstoffzuführmittel mindestens ein Düsenelement umfassen, wobei das Düsenelement mindestens zwei Düsenkammern mit je einer Strahlaustrittsöffnung hat, wobei die mindestens zwei Strahlaustrittsöffnungen an derselben Arbeitsposition in Richtung der Achse der Werkzeugspindel angeordnet sind, wobei das Düsenelement in einer Ebene beweglich angeordnet ist, die senkrecht auf der Achse der Werkzeugspindel steht, und wobei die Form der Strahlaustrittsöffnungen unterschiedlich ist.

Das Düsenelement kann dabei mindestens zwei separate Düsenkörper mit je einer Düsenkammer aufweisen, wobei sich die Strahlaustrittsöffnungen am Auslassende der Düsenkörper befinden.

Das Düsenelement kann alternativ auch nur einen einzigen Düsenkörper mit den mindestens zwei Düsenkammern aufweisen, wobei sich die Strahlaustrittsöffnungen am Auslassende des Düsenkörpers befinden.

Die Strahlaustrittsöffnungen sind vorzugsweise rechteckförmig. Die Formunterschiede betreffen dann insbesondere die Breite und die Höhe der Strahlaustrittsöffnungen.

Alle Strahlaustrittsöffnungen sind bevorzugt symmetrisch zur Ebene angeordnet, die senkrecht auf der Achse der Werkzeugspindel steht.

Das Düsenelement kann zur Positionierung bzw. Durchmessernachführung um eine Achse verschwenkbar angeordnet sein, die parallel zur Achse der Werkzeugspindel angeordnet ist.

Alternativ ist es zu dem genannten Zweck auch möglich, dass das Düsenelement translatorisch in der Ebene beweglich angeordnet ist, die senkrecht auf der Achse der Werkzeugspindel steht. Das Düsenelement ist dabei bevorzugt auf einer Linearführung beweglich angeordnet.

Das Düsenelement kann zur individuell gesteuerten Beaufschlagung jeder der Düsenkammer mit Kühlschmierstoff ausgebildet sein. Alternativ möglich ist es aber auch, dass mindestens zwei Düsenkammern des Düsenelements zur gleichzeitigen Beaufschlagung mit Kühlschmierstoff ausgebildet sind.

Das Düsenelement kann in Richtung der Achse der Werkzeugspindel ortsfest an oder auf dem Werkzeugträger angeordnet sein. Es kann in dieser Richtung auch auf einer Linearführung relativ zum Werkzeugträger verschieblich angeordnet sein. Weiterhin ist es möglich, dass das Düsenelement in Richtung der Achse ortsfest an oder auf dem Maschinenbett angeordnet ist. Möglich ist es schließlich auch, dass das Düsenelement in der genannten Richtung auf einer Linearführung relativ zum Maschinenbett verschieblich angeordnet ist.

Die Hartfeinbearbeitungswerkzeuge sind gemäß einer bevorzugten Ausführungsform der Erfindung Zahnradbearbeitungswerkzeuge, insbesondere eine Schleifscheibe oder eine Schleifschnecke.

Vorgeschlagen ist also die Kombination mehrerer - insbesondere zweier - Düsen an einer Arbeitsposition der Werkzeugspindel, die zur Einhaltung bzw. Einstellung der optimalen Position mit Bewegungsmitteln versehen sind. Die Düsen haben also eine Verstellmöglichkeit in der Ebene, die senkrecht auf der Achse der Werkzeugspindel steht.

In vorteilhafter Weise kann mit der vorgeschlagenen Lösung die oben gestellte Aufgabe vollumfänglich gelöst werden. Demnach wird erreicht, dass auch beim Einsatz verschiedenster Hartfeinbearbeitungswerkzeuge, insbesondere von Schleifwerkzeugen, die Kühlschmierstoff-Versorgungsbedingungen optimiert werden können. Die Anpassung der Kühlschmierstoffzuführmittel ist in einfacher Weise automatisch über die Maschinensteuerung möglich.

Vorgeschlagen sind also Lösungen zur Kühlmittelzufuhr für Bearbeitungsverfahren, bei denen mehrere Werkzeuge nacheinander in der gleichen Position relativ zu dem zu bearbeitenden Werkstück eingesetzt werden und wobei sich die Anforderungen an die Kühlmittelzufuhr (insbesondere betreffend den Austrittsquerschnitt, die Austrittsgeschwindigkeit, den Volumenstrom und den Druck) in Abhängigkeit der eingesetzten Werkzeuge und Bearbeitungsverfahren deutlich unterscheiden.

In der Zeichnung sind Ausführungsbeispiele der Erfindung dargestellt. Es zeigen:
- Fig. 1: in perspektivischer Ansicht eine Hartfeinbearbeitungsmaschine, ausgebildet als Verzahnungsschleifmaschine, die eine Schleif- scheibe und eine Schleifschnecke als Schleifwerkzeuge aufweist, die von einem Kühlschmierstoffzuführmittel mit Kühlmittel versorgt werden,
- Fig. 2: ein erstes Ausführungsbeispiel der Kühlschmierstoffzuführmittel, gesehen in Richtung Achse der Werkzeugspindel (Y-Achse), ausgestattet mit translatorischen Verschiebemitteln für ein Düsenelement,
- Fig. 3: ein zweites Ausführungsbeispiel der Kühlschmierstoffzuführmittel, gesehen in Richtung Achse der Werkzeugspindel (Y-Achse), ausgestattet mit rotatorischen Verschiebemitteln für ein Düsenelement, und
- Fig. 4: den Schnitt A-A gemäß Fig. 3.

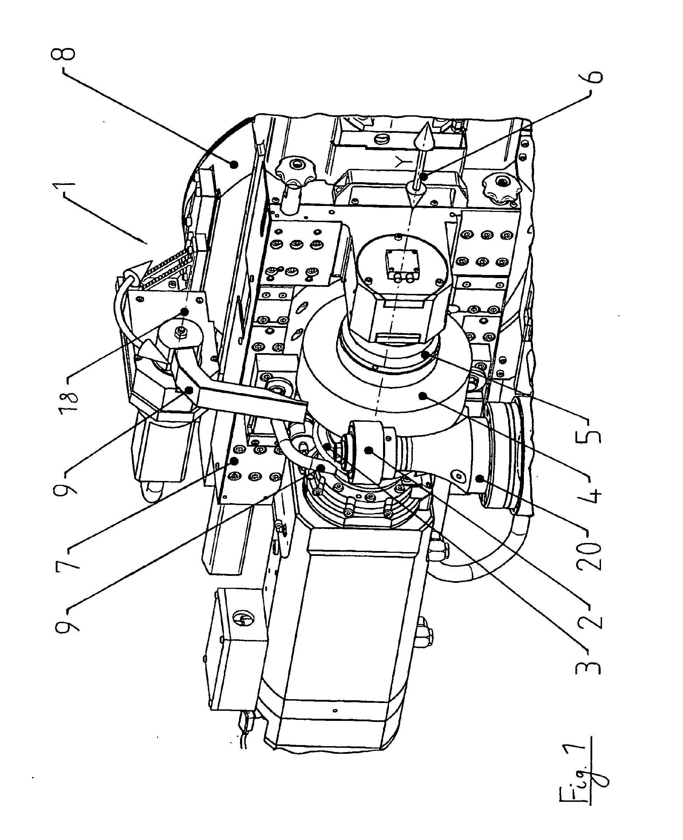

In Fig. 1 ist eine Hartfeinbearbeitungsmaschine 1 in Form einer Verzahnungsschleifmaschine zu sehen, die ein Maschinenbett (Maschinengrundrahmen) 8 aufweist. An diesem ist - unter anderem - ein Werkzeugträger (Schlitten) 7 linear verschieblich angeordnet, der eine Werkzeugspindel 5 trägt. Auf der Werkzeugspindel 5, die als einteilige Spindel ausgeführt sein kann oder die auch aus zwei oder mehreren ggf. auch separat angetriebenen Teilspindeln bestehen kann, sind mindestens zwei Hartfeinbearbeitungswerkzeuge 3, 4 angeordnet, und zwar eine Profilschleifscheibe 3 und eine nur schematisch dargestellte Schleifschnecke 4. Das mit den Werkzeugen 3, 4 zu bearbeitende Werkstück 2 ist auf einer Werkstückspindel 20 gespannt; vorliegend ist die Werkstückachse vertikal ausgerichtet.

Die Werkzeugspindel 5 weist eine Achse 6 auf. In Richtung dieser Achse kann die Werkzeugspindel 5 auf dem Werkzeugträger 7 in die eingetragene Y-Richtung verschoben werden, um die Werkzeuge 3, 4 wahlweise in Eingriff mit dem Werkstück 2 zu bringen. Insoweit entspricht die Verzahnungsschleifmaschine der vorbekannten Bauformen. Die weiteren benötigten Maschinenachsen, die natürlich für die Bearbeitung notwendig sind, werden hier nicht weiter thematisiert, da sie für die Erfindung nicht relevant sind.

Wesentlich ist nunmehr das Kühlschmierstoffzuführmittel 9, das für die Zuführung von Kühlschmierstoff zur Kontaktstelle zwischen Werkzeug 3, 4 und Werkstück 2 dient.

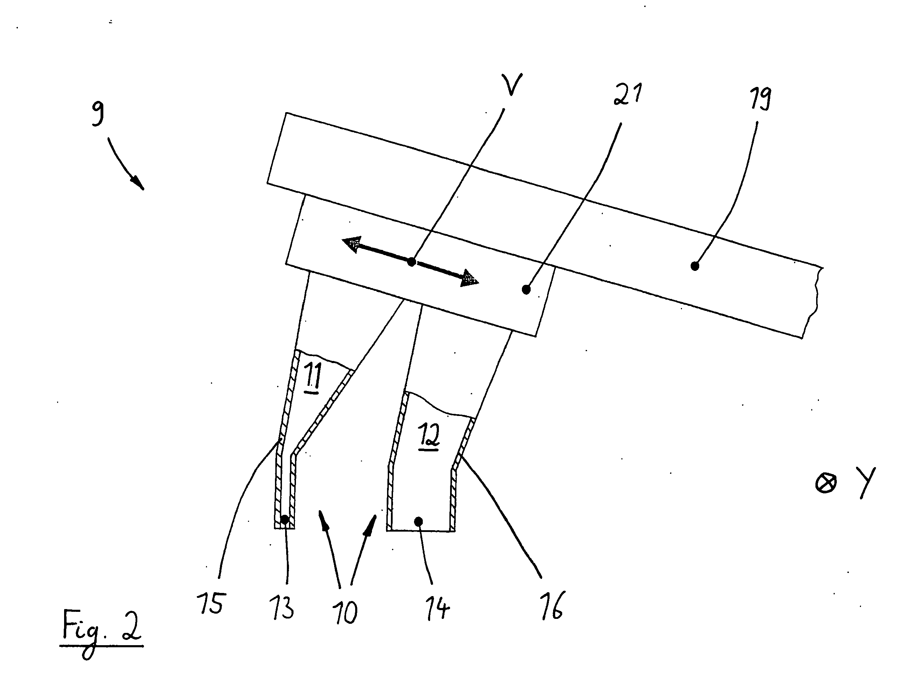

Erfindungsgemäß umfasst das Kühlschmierstoffzuführmittel 9 ein Düsenelement 10, wie es gemäß einem ersten Ausführungsbeispiel in Fig. 2 zu sehen ist. Das Düsenelement 10 hat zwei Düsenkammern 11 und 12 mit je einer Strahlaustrittsöffnung 13 bzw. 14. Dabei wird vorliegend das Düsenelement 10 durch zwei Düsenkörper 15 und 16 gebildet, die an einem Schlitten 21 befestigt sind.

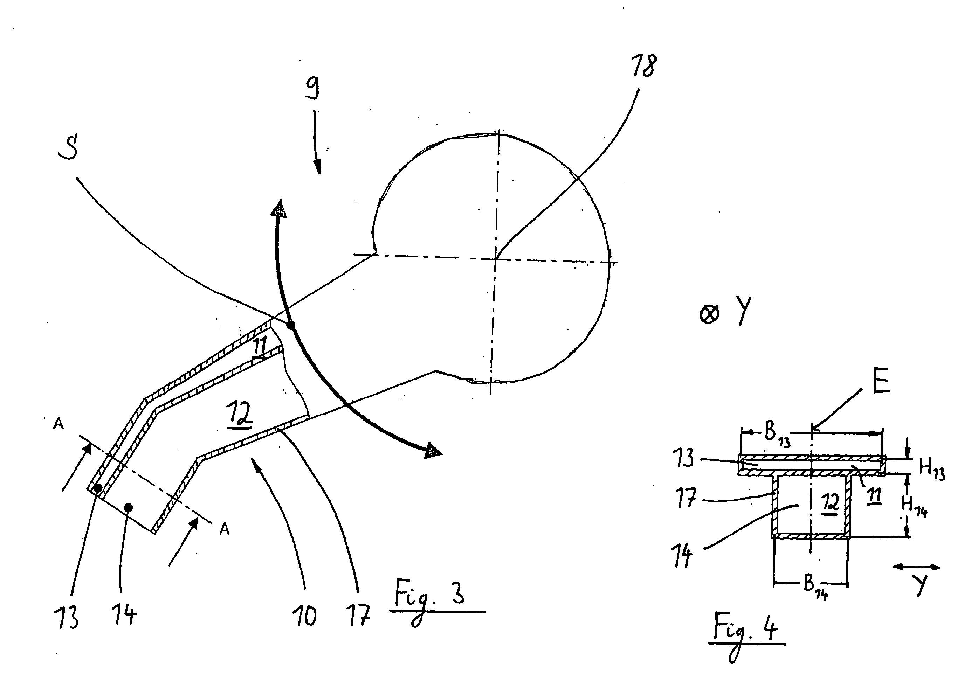

Wesentlich ist dabei, dass das Düsenelement 10 in einer Ebene E (s. Fig. 4) beweglich angeordnet ist, die senkrecht auf der Achse 6 der Werkzeugspindel 5 steht. Hiermit wird erreicht, dass die jeweiligen Strahlaustrittsöffnungen 13, 14 für das Kühlschmiermittel dem konkreten Werkzeugeinsatz optimal angepasst und einer abrichtbedingten Durchmesserveränderung des Schleifwerkzeugs nachgeführt werden können. Demgemäß kann der Schlitten 21 auf einer Linearführung 19 in eine translatorische Verschieberichtung V bewegt werden, um die jeweils optimal ausgelegten und für den konkreten Anwendungsfall passenden Düsenkörper an die Kontaktstelle zwischen Werkzeug und Werkstück heranzufahren, und zwar auf den aktuellen Durchmesser des Schleifwerkzeugs.

Die beiden Strahlaustrittsöffnungen 13 und 14 sind unterschiedlich ausgebildet. Sie sind jeweils rechteckförmig, wobei die Höhe und Breite der Austrittsöffnungen an den konkreten Werkzeugeinsatzfall optimal angepasst ist (s. hierzu die nachfolgenden Ausführungen im Zusammenhang mit Fig. 4, die analog auch hier gelten). Daher ist es möglich, abhängig vom zum Einsatz kommenden Werkzeug den bestmöglich passenden Düsenkörper 15 bzw. 16 zu positionieren und zu aktivieren.

Die Düsenkammern 11, 12 können wahlweise mit Kühlschmierstoff beaufschlagt werden, was die Maschinensteuerung veranlasst.

Die relativ dünne, aber relativ breite Strahlaustrittsöffnung 13 ist optimal für das Kühlschmieren der Schleifschnecke 4 beim Wälzschleifen geeignet. Indes ist die relativ dicke, aber weniger breite Strahlaustrittsöffnung 14 für das Kühlschmieren der Schleifscheibe 3 beim Profilschleifen geeignet.

In Fig. 3 und 4 ist eine alternative Lösung skizziert, mit der es in gleicher Weise ermöglicht wird, die Kontaktstelle zwischen Werkzeug und Werkstück optimal mit Kühlschmierstoff zu versorgen. Der Düsenkörper 17 der Kühlschmierstoffzuführmittel 9 ist hier als einteiliges Element ausgebildet, in dem zwei Düsenkammern 11 und 12 für den Zufluss von Kühlschmiermittel ausgebildet sind. Der Düsenkörper 17 ist dabei um eine Achse 18, die parallel zur Y-Achse ist, schwenkbar angeordnet. Die Verschwenkrichtung S ist eingezeichnet. Damit kann auch hier in optimaler Weise bei abrichtbedingten Durchmesserveränderungen des Schleifwerkzeugs ein Nachführen des Düsenaustritts erfolgen.

Wie anhand des Schnitts A-A gemäß Fig. 4 gesehen werden kann, sind die beiden Düsenkammern 11 und 12 und deren Ende, d. h. die Strahlaustrittsöffnungen 13 und 14, rechteckförmig ausgebildet. Allerdings sind die Breiten B₁₃ der Strahlaustrittsöffnung 13 und B₁₄ der Strahlaustrittsöffnung 14 sowie die Höhen H₁₃ der Strahlaustrittsöffnung 13 und H₁₄ der Strahlaustrittsöffnung 14 unterschiedlich.

Demgemäß ergibt sich bei Ausfluss des Kühlschmiermittels durch die Düsenkammer 11 ein breiter, aber relativ dünner Strahl, der optimal für das Kühlschmieren der Schleifschnecke 4 beim Wälzschleifen ist.

Dem gegenüber fließt der Kühlschmierstoff bei Austritt aus der Düsenkammer 12 mit einem relativ dicken Strahl aus, der allerdings weit weniger breit ist, der optimal für das Kühlschmieren der Schleifscheibe 3 beim Profilschleifen ist.

Der Verschiebebewegung V bzw. der Schwenkbewegung S kann ggf. noch eine weitere Bewegung zur Verschiebung des Düsenelements überlagert werden, um nicht nur optimal an Durchmesserveränderungen des Schleifwerkzeugs anpassen zu können, sondern auch die jeweils optimale Strahlaustrittsöffnung für das betreffende Schleifwerkzeug 3, 4 in Arbeitsposition bringen zu können.

Soweit vorstehend von einer (im Raum absolut) ortsfesten Anordnung der Düse an oder auf dem Maschinenbett die Rede ist, sei hierzu folgendes angemerkt: Auf dem eigentlichen Maschinenbett ist zumeist ein Maschinenständer (beweglich) angeordnet, wobei auf dem Ständer wiederum ein Schwenkteil (beweglich) angeordnet ist. Auf dem Schwenkteil ist dann z. B. ein Schlitten auf einer Linearführung (für die Y-Achse) beweglich angeordnet.

Unter der Angabe einer ortsfesten Anordnung der Düse an oder auf dem Maschinenbett ist zu verstehen, dass die Düse bei bestimmungsgemäßem Gebrauch während des Schleifvorgangs nicht bewegt wird. Dies ist also definitionsgemäß auch dann der Fall, wenn die Düse - wie es zumeist der Fall sein wird - auf dem Schwenkteil befestigt ist und somit nicht direkt, sondern über das Schwenkteil und den Maschinenständer indirekt mit dem Maschinenbett verbunden ist, so dass die Düse allerdings bei der bestimmungsgemäßer Benutzung relativ zum Bett ortsfest angeordnet ist (obwohl sie durch das Schwenkteil und den Ständer relativ zum eigentlichen Maschinenbett bewegt (verstellt) werden kann).

### Bezugszeichenliste:

- 1: Hartfeinbearbeitungsmaschine
- 2: Werkstück
- 3: Hartfeinbearbeitungswerkzeug (Schleifscheibe)
- 4: Hartfeinbearbeitungswerkzeug (Schleifschnecke)
- 5: Werkzeugspindel
- 6: Achse
- 7: Werkzeugträger
- 8: Maschinenbett (Maschinengrundrahmen)
- 9: Kühlschmierstoffzuführmittel
- 10: Düsenelement
- 11: Düsenkammer
- 12: Düsenkammer
- 13: Strahlaustrittsöffnung
- 14: Strahlaustrittsöffnung
- 15: Düsenkörper
- 16: Düsenkörper
- 17: Düsenkörper
- 18: Achse
- 19: Linearführung
- 20: Werkstückspindel
- 21: Schlitten
- Y: Achsrichtung der Werkzeugspindel
- E: Ebene
- B₁₃: Breite
- B₁₄: Breite
- H₁₃: Höhe
- H₁₄: Höhe
- V: Verschieberichtung
- S: Verschwenkrichtung

## Patentansprüche

1. Hartfeinbearbeitungsmaschine (1) zum Hartfeinbearbeiten eines Werkstücks (2), die mindestens zwei unterschiedliche Hartfeinbearbeitungswerkzeuge (3, 4) umfasst, die auf einer Werkzeugspindel (5) angeordnet sind, wobei die Werkzeugspindel (5) in Richtung (Y) ihrer Achse (6) verschieblich auf einem Werkzeugträger (7) angeordnet ist, der relativ zu einem Maschinenbett (8) translatorisch verschieblich ist, und wobei die Hartfeinbearbeitungsmaschine (1) weiterhin Kühlschmierstoffzuführmittel (9) für die Zuleitung von Kühlschmierstoff zur Bearbeitungsstelle zwischen Werkstück (2) und Hartfeinbearbeitungswerkzeug (3, 4) aufweist, wobei die die Kühlschmierstoffzuführmittel (9) mindestens ein Düsenelement (10) umfassen, wobei das Düsenelement (10) mindestens zwei Düsen- kammern (11, 12) mit je einer Strahlaustrittsöffnung (13, 14) hat, und wobei das Düsenelement (10) in einer Ebene (E) beweglich angeordnet ist, die senkrecht auf der Achse (6) der Werkzeugspindel (5) steht,
**dadurch gekennzeichnet,**
**dass** die mindestens zwei Strahlaustrittsöffnungen (13, 14) an derselben Arbeitsposition in Richtung (Y) der Achse (6) der Werkzeugspindel (5) angeordnet sind, wobei die Form der Strahlaustrittsöffnungen (13, 14) unterschiedlich ist.

2. Hartfeinbearbeitungsmaschine nach Anspruch 1, **dadurch gekennzeichnet, dass** das Düsenelement (10) mindestens zwei separate Düsenkörper (15, 16) mit je einer Düsenkammer (11, 12) aufweist, wobei sich die Strahlaustrittsöffnungen (13, 14) am Auslassende der Düsenkörper (15, 16) befinden.

3. Hartfeinbearbeitungsmaschine nach Anspruch 1, **dadurch gekennzeichnet, dass** das Düsenelement (10) einen einzigen Düsenkörper (17) mit den mindestens zwei Düsenkammern (11, 12) aufweist, wobei sich die Strahlaustrittsöffnungen (13, 14) am Auslassende des Düsenkörpers (17) befinden.

4. Hartfeinbearbeitungsmaschine nach einem der Ansprüche 1 bis 3, **dadurch gekennzeichnet, dass** die Strahlaustrittsöffnungen (13, 14) rechteckförmig sind.

5. Hartfeinbearbeitungsmaschine nach einem der Ansprüche 1 bis 4, **dadurch gekennzeichnet, dass** die Formunterschiede die Breite (B₁₃, B₁₄) und die Höhe (H₁₃, H₁₄) der Strahlaustrittsöffnungen (13, 14) betreffen.

6. Hartfeinbearbeitungsmaschine nach einem der Ansprüche 1 bis 5, **dadurch gekennzeichnet, dass** alle Strahlaustrittsöffnungen (13, 14) symmetrisch zur Ebene (E) angeordnet sind, die senkrecht auf der Achse (6) der Werkzeugspindel (5) steht.

7. Hartfeinbearbeitungsmaschine nach einem der Ansprüche 1 bis 6, **dadurch gekennzeichnet, dass** das Düsenelement (10) um eine Achse (18) verschwenkbar angeordnet ist, die parallel zur Achse (6) der Werkzeugspindel (5) angeordnet ist.

8. Hartfeinbearbeitungsmaschine nach einem der Ansprüche 1 bis 6, **dadurch gekennzeichnet, dass** das Düsenelement (10) translatorisch in der Ebene (E) beweglich angeordnet ist, die senkrecht auf der Achse (6) der Werkzeugspindel (5) steht.

9. Hartfeinbearbeitungsmaschine nach Anspruch 8, **dadurch gekennzeichnet, dass** das Düsenelement (10) auf einer Linearführung (19) beweglich angeordnet ist.

10. Hartfeinbearbeitungsmaschine nach einem der Ansprüche 1. bis 9, **dadurch gekennzeichnet, dass** das Düsenelement (10) in Richtung (Y) der Achse (6) der Werkzeugspindel (5) ortsfest an oder auf dem Werkzeugträger (7) angeordnet ist.

11. Hartfeinbearbeitungsmaschine nach einem der Ansprüche 1 bis 9, **dadurch gekennzeichnet, dass** das Düsenelement (10) in Richtung (Y) der Achse (6) der Werkzeugspindel (5) auf einer Linearführung relativ zum Werkzeugträger (7) verschieblich angeordnet ist.

12. Hartfeinbearbeitungsmaschine nach einem der Ansprüche 1 bis 9, **dadurch gekennzeichnet, dass** das Düsenelement (10) in Richtung (Y) der Achse (6) der Werkzeugspindel (5) ortsfest an oder auf dem Maschinenbett (8) angeordnet ist.

13. Hartfeinbearbeitungsmaschine nach einem der Ansprüche 1 bis 9, **dadurch gekennzeichnet, dass** das Düsenelement (10) in Richtung (Y) der Achse (6) der Werkzeugspindel (5) auf einer Linearführung relativ zum Maschinenbett (8) verschieblich angeordnet ist.

14. Hartfeinbearbeitungsmaschine nach einem der Ansprüche 1 bis 13, dadurch gekenntzeichnet, dass die Hartfeinbearbeitungswerkzeuge (3, 4) Zahnradbearbeitungswerkzeuge sind, insbesondere eine Schleifscheibe oder eine Schleifschnecke.

## Claims

1. Hard finish machine (1) for hard finishing of a workpiece (2), comprising at least two different hard finish tools (3, 4) which are arranged on a tool spindle (5), wherein the tool spindle (5) is arranged movable in the direction (Y) of its axis (6) on a tool carrier (7), wherein the tool carrier (7) is translational movable relatively to a machine bed (8) and wherein the hard finish machine furthermore comprises cooling lubricant supplying means (9) for the supply of cooling lubricant to the machining region between the workpiece (2) and the hard finish tool (2, 3), wherein the cooling lubricant supplying means (9) comprise at least one nozzle element (10), wherein the nozzle element (10) comprises at least two nozzle chambers (11, 12) each having a stream exit opening (13, 14) and wherein the nozzle element (10) is movable in a plane (E) which is perpendicular to the axis (6) of the tool spindle (5),
**characterized in that**
the at least two stream exit openings (13, 14) are arranged at the same working position in the direction (Y) of the axis (6) of the tool spindle (5), wherein the form of the stream exit openings (13, 14) is different.

2. Hard finish machine according to claim 1, **characterized in that** the nozzle element (10) has at least two separate nozzle bodies (15, 16) each having a nozzle chamber (11, 12), wherein the stream exit openings (13, 14) are arranged at the outlet end of the nozzle bodies (15, 16).

3. Hard finish machine according to claim 1, **characterized in that** the nozzle element (10) has a single nozzle body (17) with the at least two nozzle chambers (11, 12), wherein the stream exit openings (13, 14) are arranged at the outlet end of the nozzle body (17).

4. Hard finish machine according to one of claims 1 to 3, **characterized in that** the stream exit openings (13, 14) have a rectangular shape.

5. Hard finish machine according to one of claims 1 to 4, **characterized in that** the differences in the form relate to the width (B₁₃, B₁₄) and the height (H₁₃, H₁₄) of the stream exit openings (13, 14).

6. Hard finish machine according to one of claims 1 to 5, **characterized in that** all stream exit openings (13, 14) are arranged symmetrically to the plane (E) which is perpendicular to the axis (6) of the tool spindle (5).

7. Hard finish machine according to one of claims 1 to 6, **characterized in that** the nozzle element (10) is arranged pivotable around an axis (18) which is parallel to the axis (6) of the tool spindle (5).

8. Hard finish machine according to one of claims 1 to 6, **characterized in that** the nozzle element (10) is arranged translational movable in the plane (E) which is perpendicular to the axis (6) of the tool spindle (5).

9. Hard finish machine according to claim 8, **characterized in that** the nozzle element (10) is arranged movable on a linear guide (19).

10. Hard finish machine according to one of claims 1 to 9, **characterized in that** the nozzle element (10) is arranged stationary in the direction (Y) of the axis (6) of the tool spindle (5) at or on the tool carrier (7).

11. Hard finish machine according to one of claims 1 to 9, **characterized in that** the nozzle element (10) is arranged movable on a linear guide in the direction (Y) of the axis (6) of the tool spindle (5) relatively to the tool carrier (7).

12. Hard finish machine according to one of claims 1 to 9, **characterized in that** the nozzle element (10) is arranged stationary in the direction (Y) of the axis (6) of the tool spindle (5) at or on the machine bed (8).

13. Hard finish machine according to one of claims 1 to 9, **characterized in that** the nozzle element (10) is arranged movable on a linear guide in the direction (Y) of the axis (6) of the tool spindle (5) relatively to the machine bed (8).

14. Hard finish machine according to one of claims 1 to 13, **characterized in that** the hard finish tools (3, 4) are gear machining tools, especially a grinding wheel or a grinding worm.

## Revendications

1. Machine d'usinage dur et fin (1) pour l'usinage dur et fin d'une pièce à usiner (2), laquelle machine d'usinage dur et fin comporte au moins deux outils d'usinage dur et fin (3, 4) différents qui sont disposés sur une broche d'outil (5), la broche d'outil (5) étant disposée sur un porte-outil (7) de manière déplaçable dans la direction (Y) de son axe (6), lequel porte-outil peut se déplacer en translation par rapport à un banc de machine (8), et la machine d'usinage dur et fin (1) comprenant en outre des moyens d'acheminement de lubrifiant de refroidissement (9) pour amener du lubrifiant de refroidissement jusqu'au point d'usinage entre la pièce à usiner (2) et l'outil d'usinage dur et fin (3, 4), les moyens d'acheminement de lubrifiant de refroidissement (9) comportant au moins un élément de buse (10), l'élément de buse (10) possédant au moins deux chambres de buse (11, 12) comprenant chacune un orifice de sortie de jet (13, 14), et l'élément de buse (10) étant disposé de manière mobile dans un plan (E) qui est perpendiculaire à l'axe (6) de la broche d'outil (5),
**caractérisée en ce que**
les au moins deux orifices de sortie de jet (13, 14) sont disposés à la même position de travail dans la direction (Y) de l'axe (6) de la broche d'outil (5), la forme des orifices de sortie de jet (13, 14) étant différente.

2. Machine d'usinage dur et fin selon la revendication 1, **caractérisée en ce que** l'élément de buse (10) comprend au moins deux corps de buse distincts (15, 16) comprenant chacun une chambre de buse (11, 12), les orifices de sortie de jet (13, 14) se situant au niveau de l'extrémité de sortie des corps de buse (15, 16).

3. Machine d'usinage dur et fin selon la revendication 1, **caractérisée en ce que** l'élément de buse (10) comprend un corps de buse unique (17) comprenant les au moins deux chambres de buse (11, 12), les orifices de sortie de jet (13, 14) se situant au niveau de l'extrémité de sortie du corps de buse (17).

4. Machine d'usinage dur et fin selon l'une quelconque des revendications 1 à 3, **caractérisée en ce que** les orifices de sortie de jet (13, 14) sont rectangulaires.

5. Machine d'usinage dur et fin selon l'une quelconque des revendications 1 à 4, **caractérisée en ce que** les différences de forme concernent la largeur (B₁₃, B₁₄) et la hauteur (H₁₃, H₁₄) des orifices de sortie de jet (13, 14).

6. Machine d'usinage dur et fin selon l'une quelconque des revendications 1 à 5, **caractérisée en ce que** tous les orifices de sortie de jet (13, 14) sont disposés de manière symétrique par rapport au plan (E) qui est perpendiculaire à l'axe (6) de la broche d'outil (5).

7. Machine d'usinage dur et fin selon l'une quelconque des revendications 1 à 6, **caractérisée en ce que** l'élément de buse (10) est disposé de manière à pouvoir pivoter autour d'un axe (18) qui est disposé parallèlement à l'axe (6) de la broche d'outil (5).

8. Machine d'usinage dur et fin selon l'une quelconque des revendications 1 à 6, **caractérisée en ce que** l'élément de buse (10) est disposé de manière mobile en translation dans le plan (E) qui est perpendiculaire à l'axe (6) de la broche d'outil (5).

9. Machine d'usinage dur et fin selon la revendication 8, **caractérisée en ce que** l'élément de buse (10) est disposé de manière mobile sur un guidage linéaire (19).

10. Machine d'usinage dur et fin selon l'une quelconque des revendications 1 à 9, **caractérisée en ce que** l'élément de buse (10) est disposé de manière fixe contre ou sur le porte-outil (7) dans la direction (Y) de l'axe (6) de la broche d'outil (5).

11. Machine d'usinage dur et fin selon l'une quelconque des revendications 1 à 9, **caractérisée en ce que** l'élément de buse (10) est disposé sur un guidage linéaire de manière déplaçable par rapport au porte-outil (7) dans la direction (Y) de l'axe (6) de la broche d'outil (5).

12. Machine d'usinage dur et fin selon l'une quelconque des revendications 1 à 9, **caractérisée en ce que** l'élément de buse (10) est disposé de manière fixe contre ou sur le banc de machine (8) dans la direction (Y) de l'axe (6) de la broche d'outil (5).

13. Machine d'usinage dur et fin selon l'une quelconque des revendications 1 à 9, **caractérisée en ce que** l'élément de buse (10) est disposé sur un guidage linéaire de manière déplaçable par rapport au banc d'outil (8) dans la direction (Y) de l'axe (6) de la broche d'outil (5).

14. Machine d'usinage dur et fin selon l'une quelconque des revendications 1 à 13, **caractérisée en ce que** les outils d'usinage dur et fin (3, 4) sont des outils d'usinage de roues dentées, en particulier une meule ou une vis sans fin de meulage.
